# FASCICULE DE BREVET EUROPEEN

(11) **EP 4 061 659 B1**
(45) Date de publication et mention de la délivrance du brevet: **29.11.2023**
(21) Numéro de dépôt: 20803216.9
(22) Date de dépôt: 16.10.2020
(51) Int. Cl.: B60K 1/04, B62D 21/15

(54) **DISPOSITIF DE PROTECTION DE LA BATTERIE DE TRACTION DES VÉHICULES ÉLECTRIQUES**
VORRICHTUNG ZUM SCHUTZ DER TRAKTIONSBATTERIE VON ELEKTROFAHRZEUGEN
DEVICE FOR PROTECTING THE TRACTION BATTERY OF ELECTRIC VEHICLES

(30) Priorité: 22.11.2019 FR 1913070
(43) Date de publication de la demande: 28.09.2022
(73) Titulaire: PSA Automobiles SA, 78300 Poissy (FR)
(72) Inventeur: KOZAK, Alban, 28410 BOUTIGNY PROUAIS (FR); COIFFIER, Frederic, 91310 MONTLHERY (FR); LE BLAY, Marie Dominique, 78830 BONNELLES (FR); VALTIER, Alain, 78770 AUTOUILLET (FR); LAMOURIC, Stephane, 78280 GUYANCOURT (FR)
(86) Numéro de dépôt international: PCT/FR2020/051851
(87) Numéro de publication internationale: WO 2021/099704

(56) Documents cités:
- WO-A1-2012/028956
- WO-A1-2013/041937
- DE-A1-102013 005 571
- DE-B3-102015 013 533
- JP-A- 2011 218 910

## Description

L'invention s'applique au domaine de la protection de la batterie de traction équipant les véhicules automobiles à motorisation électrique.

Les véhicules électriques sont équipés de batteries destinées à leur assurer une autonomie suffisante. Toutefois, ces batteries sont notablement plus lourdes, plus encombrantes et à plus haute tension que les batteries ordinaires embarquées sur les modèles équivalents de véhicules à motorisation thermique.

En général, les modules des batteries de traction des véhicules électriques sont conditionnés et enfermés dans des bacs implantés sous le plancher et montés entre l'avant du véhicule et le plancher d'assise arrière où ils occupent tout l'espace disponible qui est libéré par l'absence de réservoir de carburant.

En cas de choc sur un véhicule électrique, les conséquences de l'endommagement de la batterie sont plus sérieuses et plus importantes que sur un véhicule thermique.

En particulier, un impact à l'arrière du véhicule peut provoquer un recul non maîtrisé du train arrière (par rupture des organes de fixation sur la caisse ou par contact direct de la traverse de train sur le couvercle du bac de batterie sous chargement) et entraîner une détérioration des modules de la batterie et, par suite, un risque d'incendie.

Par conséquent, les batteries de traction des véhicules électriques nécessitent des moyens de protection renforcés et adaptés car ce type de véhicule doit répondre à des contraintes plus sévères, en particulier aux USA, pour assurer la sécurité des personnes en cas d'accident, et notamment, pour préserver l'intégrité des modules de batterie en cas de choc et éviter ainsi les courts-circuits.

Généralement, les bacs supportant les modules de batterie sont pourvus d'une armature au moins partiellement périphérique, comprenant deux longerons latéraux raccordés, via une liaison coudée, à une traverse arrière.

Le brevet FR2972169B1 décrit un châssis de véhicule, notamment à propulsion électrique, comprenant une plateforme portant deux longerons intermédiaires sensiblement parallèles disposés à distance l'un de l'autre en position centrale entre des longerons latéraux reliés transversalement par une plaque de fond en formant un compartiment intercalaire pouvant accueillir un réservoir d'énergie, tel qu'une batterie.

Le brevet FR3000459B1 décrit un châssis pour véhicules électriques comprenant, d'une part, des sabots tubulaires assurant la connexion angulaire et l'assemblage entre des éléments longitudinaux et des éléments transversaux de la structure du châssis et, d'autre part, des bâtis destinés à recevoir des trains roulant.

Le document WO 2012/028956 A1 montre encore un dispositif de protection de la batterie d'un véhicule électrique vis-à-vis des impacts sur le train arrière.

Cependant, les éléments de châssis proposés dans ces brevets ne sont, ni conçus, ni adaptés pour renforcer l'armature structurante du bac de batterie de façon à permettre, sans pièce intermédiaire, d'augmenter son potentiel d'absorption d'énergie et de préserver ainsi la batterie de traction en cas d'impacts sur le train arrière du véhicule.

Dans ce contexte spécifique, l'invention vise à résoudre les problèmes techniques mentionnés ci-dessus en proposant un dispositif de protection assurant, à la fois, une cinématique de déformation sélective du train arrière du véhicule et, une absorption efficace des chocs par l'armature du bac de batterie.

Ce but est atteint au moyen d'un dispositif de protection de la batterie d'un véhicule électrique vis-à-vis des impacts du train arrière, ladite batterie étant conditionnée dans un bac pourvu d'une armature comprenant, de part et d'autre du bac, un longeron dont l'extrémité est raccordée, via une zone de liaison coudée, à l'extrémité latérale en regard d'une traverse arrière et dont le flanc extérieur est pourvu d'au moins un élément de support du bac sur la caisse du véhicule, caractérisé en ce que chaque zone de liaison comporte un bec en saillie vers l'arrière formé de la solidarisation d'au moins deux excroissances portées par les extrémités respectives du longeron et de la traverse.

Selon une caractéristique avantageuse, les excroissances des longerons se prolongent au-dessous des excroissances de la traverse.

Selon une autre caractéristique, les becs comprennent en outre des excroissances portées par les éléments de support du bac.

De préférence, les excroissances des éléments de support du bac se prolongent au-dessus des excroissances de la traverse.

Selon encore une autre caractéristique, les becs présentent une inclinaison divergente comprise entre 120° et 150° par rapport au plan vertical passant par l'axe de la traverse.

Selon une variante de réalisation de l'invention, le train arrière porte deux butées symétriques s'étendant vers l'avant en direction des becs de l'armature.

Selon une autre variante, les éléments de support du bac portent chacun deux platines sensiblement horizontales de fixation sur la caisse du véhicule.

De préférence, ces platines délimitent entre elles un créneau destiné à recevoir, en cas d'impact, une chape portée par un bras longitudinal déformable de fixation du train arrière.

Selon encore une autre variante de réalisation, les butées sont montées entre les bras longitudinaux déformables de fixation du train arrière.

Un autre objet de l'invention est un véhicule électrique équipé d'une batterie conditionnée dans un bac pourvu d'un dispositif de protection contre les impacts présentant les caractéristiques définies ci-dessus.

Le dispositif de l'invention permet de préserver les modules de batterie de la batterie de traction vis-à-vis des éventuelles déformations résultant d'une collision par l'arrière à grande vitesse avec un autre véhicule.

Le dispositif de l'invention s'intègre parfaitement au design de l'armature du bac de batterie et offre un niveau de sécurité maximum même pour les chocs arrières les plus sévères.

En particulier, le dispositif de l'invention est conforme aux normes américaines qui imposent un recouvrement de la zone d'impact d'au moins 70% du train arrière pour un choc avec un véhicule pesant environ 1,4 tonnes et roulant à 80km/h.

La cinématique de déformation programmée (par flambage) du bras longitudinal de train arrière permet de localiser très précisément sa zone d'impact sur la traverse de l'armature du bac de la batterie qui a été renforcée à cet effet par la présence d'un bec.

Plus précisément, cette déformation qui ne se produit que sous des contraintes résultant d'un choc arrière à grande vitesse permet un recul maîtrisé de la traverse de train arrière sans rupture de la liaison avec la caisse du véhicule jusqu'à venir en butée vers l'avant contre le bec de renfort de l'armature du bac de batterie.

Un essai a été réalisé avec un charriot impacteur de 1368 kg lancé à plus de 80 km/h générant une énergie cinétqiue incidente d'environ 346 kilojoules.

Selon l'invention, le contact de butée se produit ainsi de façon déportée, par exemple, via le support de la butée de talonnage, et contribue à maintenir la traverse éloignée de la batterie.

Par conséquent, grâce à l'invention, l'armature du bac de la batterie est capable d'absorber l'énergie cinétique de l'impact sans déformer le bac en maintenant la traverse de train arrière à distance tout en limitant la décélération transmise aux modules via l'armature.

Toujours grâce à l'invention, le train arrière, destiné aux véhicules électriques, est adapté et combiné à l'armature renforcée du bac de batterie et son mode spécifique de déformation (notamment, au niveau de ses bras longitudinaux) permet d'augmenter le potentiel d'absorption d'énergie en sécurisant ainsi les modules de la batterie.

En outre, le dispositif de protection de l'invention est transposable aux différents empattements des plateformes modulaires dédiées aux lignes de production des véhicules et, en particulier, de celles destinées aux véhicules électriques (dites eCMP pour « *electric Common Modular Platform* »)*.*

D'autres caractéristiques et avantages de l'invention ressortiront à la lecture de la description qui va suivre, en référence aux figures annexées et détaillées ci-après.
[Fig. 1] est une vue en perspective de l'armature du bac de batterie équipé d'un mode de réalisation du dispositif de protection selon l'invention.
[Fig. 2A] est une vue partielle de dessus par l'avant du dispositif de protection de la figure 1.
[Fig. 2B] est une vue partielle de dessus par l'arrière du dispositif de protection de la figure 1.
[Fig. 2C] est une vue partielle de dessus du dispositif de protection de la figure 1.
[Fig. 3] est une vue en perspective du train arrière d'un véhicule équipé du dispositif de protection selon l'invention.
[Fig. 4A] est une vue d'ensemble en perspective du dispositif des figures 1 et 3 après impact sur l'arrière gauche du véhicule.
[Fig. 4B] est une vue partielle de dessus et en perspective du dispositif des figures 1 et 3 après impact sur l'arrière gauche du véhicule.

Pour plus de clarté, les éléments identiques ou similaires sont repérés par des signes de référence identiques sur l'ensemble des figures.

Naturellement, les modes de mise en oeuvre de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

Le dispositif de l'invention est destiné à la protection des modules de la batterie de traction des véhicules électriques qui sont conditionnés et enfermés dans des bacs (non représentés) implantés dans un espace 10 situé sous le plancher entre l'avant du véhicule et le plancher d'assise arrière.

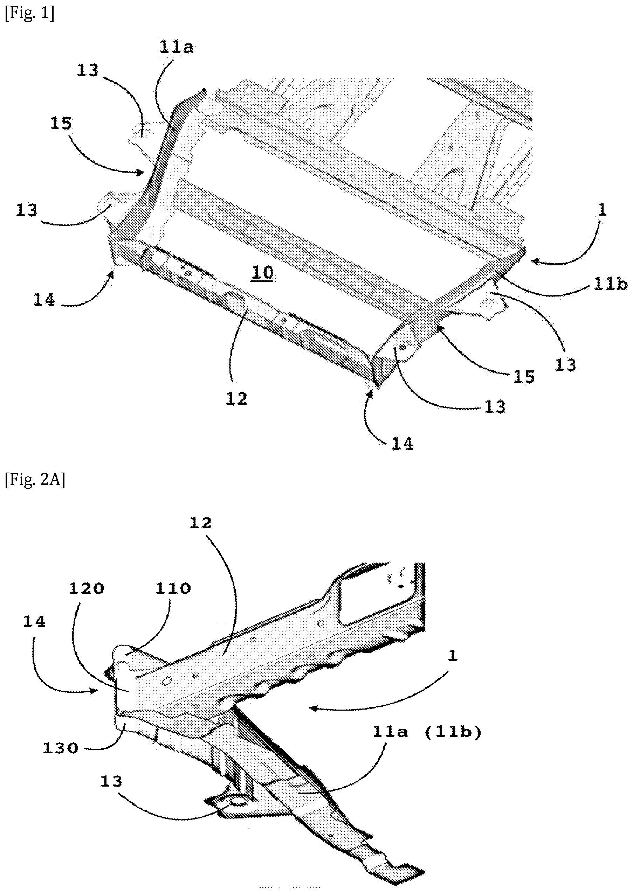

Un tel bac est pourvu d'une armature 1, au moins partiellement périphérique, comprenant, de part et d'autre du bac, un longeron 11a, 11b. Les extrémités de ces longerons sont raccordées, via des zones de liaison coudées, aux extrémités latérales en regard d'une traverse arrière 12. Le flanc extérieur des longerons 11a, 11b est pourvu d'au moins un, et ici de deux éléments de support du bac sur la caisse du véhicule, comme illustré par la figure 1.

Les deux éléments latéraux de support du bac sont formés de deux platines 13 sensiblement horizontales dans lesquels sont ménagés des orifices pour la pose d'organes (non représentés) de fixation sur la caisse du véhicule.

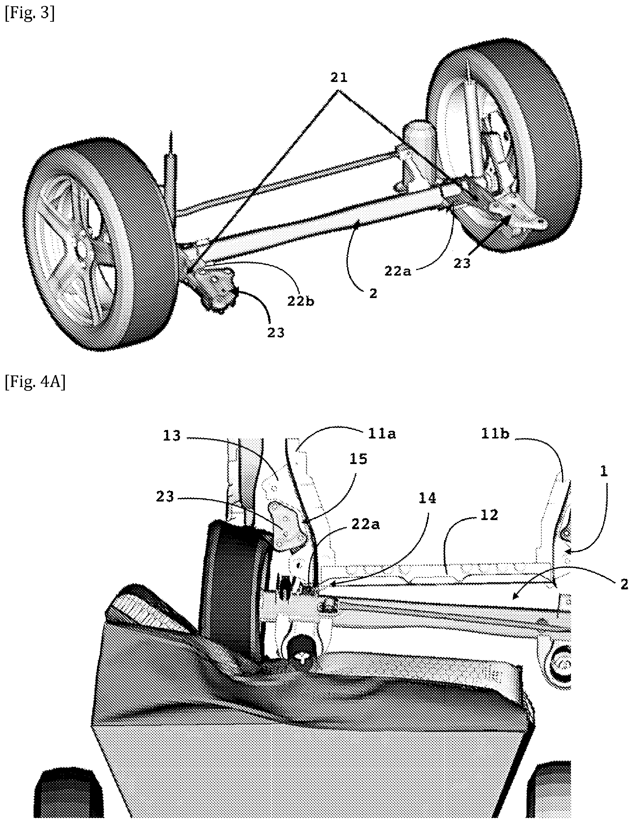

L'armature 1 est positionnée immédiatement derrière le bac, de préférence au niveau de son couvercle, et devant le train arrière 2 du véhicule qui porte, quant à lui, des bras longitudinaux 21 de fixation sur la caisse, comme illustré sur la figure 3.

L'invention a pour objectif de renforcer l'armature 1 du bac tout en présentant une zone sélective d'impact pour le train arrière 2 en cas de collision par l'arrière.

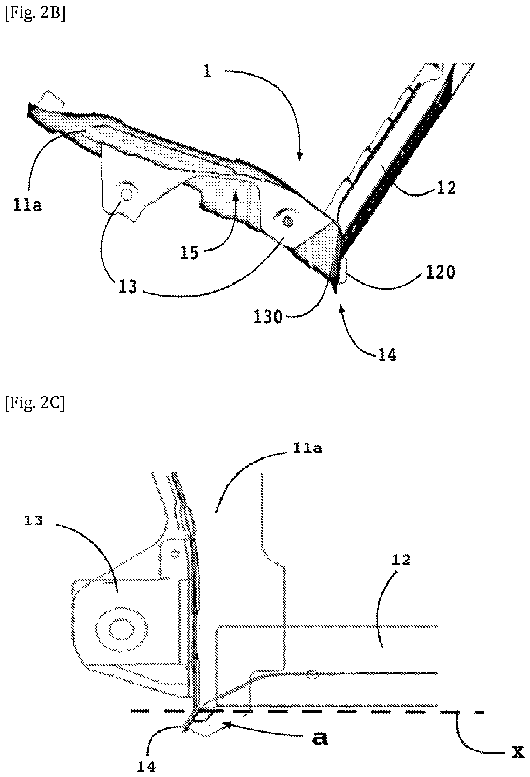

A cet effet et comme illustré par les figures 2A, 2B et 2C, chacune des zones de liaison latérale coudées comporte un bec 14 en saillie vers l'arrière, formé de la solidarisation d'au moins deux excroissances 110, 120 portées par les extrémités respectives des longerons 11a, 11b et de la traverse 12.

La feuillure des deux becs latéraux 14 présente une inclinaison divergente a comprise entre 120° et 150° par rapport au plan vertical passant par l'axe X de la traverse 12, comme illustré par la figure 2C.

Dans le mode de réalisation représenté sur les figures, chaque bec 14 comprend, en outre, une excroissance 130 portée aussi par l'élément 13 de support du bac qui lui est associé.

De préférence, les excroissances 110 des longerons 11a, 11b se prolongent au-dessous des excroissances 120 de la traverse 12 tandis que les excroissances 130 des éléments 13 de support du bac se prolongent au-dessus des excroissances 120 de la traverse 12, comme illustré par les figures 2A et 2B.

L'invention prévoit également que le train arrière 2 porte deux butées symétriques 22a, 22b s'étendant vers l'avant en direction des becs 14 de l'armature 1 du bac. Ces butées sont montées entre des bras longitudinaux 21 déformables de fixation du train arrière 2 sur la caisse du véhicule, comme illustré par la figure 3.

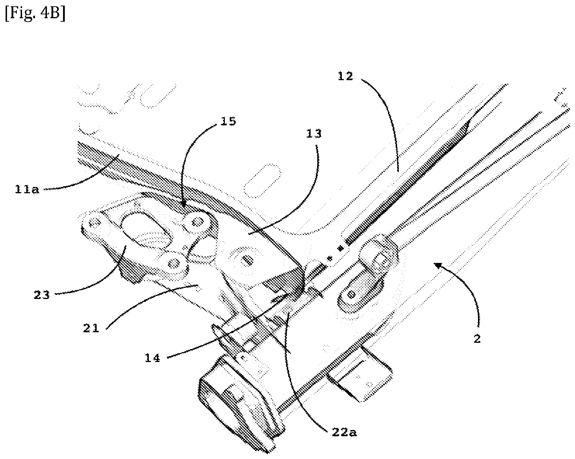

Les platines 13 des éléments de support du bac délimitent entre elles un créneau 15 (visible sur les figures 1, 2B et 4B), destiné à recevoir, en cas d'impact, une chape 23 portée par chacun des bras longitudinaux 21 déformables du train arrière 2, comme illustré par les figures 4A et 4B.

## Revendications

1. Dispositif de protection de la batterie d'un véhicule électrique vis-à-vis des impacts sur le train arrière (2), ladite batterie étant conditionnée dans un bac pourvu d'une armature (1) comprenant, de part et d'autre du bac, un longeron (11a, 11b) dont l'extrémité est raccordée, via une zone de liaison coudée, à l'extrémité latérale en regard d'une traverse arrière (12) et dont le flanc extérieur est pourvu d'au moins un élément de support du bac, **caractérisé en ce que** chaque zone de liaison comporte un bec (14) en saillie vers l'arrière formé de la solidarisation d'au moins deux excroissances (110, 120) portées par les extrémités respectives du longeron (11a, 11b) et de la traverse (12).

2. Dispositif de protection selon la revendication 1, **caractérisé en ce que** les excroissances (110) des longerons (11a, 11b) se prolongent au-dessous des excroissances (120) de la traverse (12).

3. Dispositif de protection selon l'une des revendications précédentes, **caractérisé en ce que** lesdits becs (14) comprennent, en outre, des excroissances (130) portées par les éléments de support du bac.

4. Dispositif de protection selon la revendication précédente, **caractérisé en ce que** les excroissances (130) des éléments de support du bac se prolongent au-dessus des excroissances (120) de la traverse (12).

5. Dispositif de protection selon l'une des revendications précédentes, **caractérisé en ce que** lesdits becs (14) présentent une inclinaison divergente comprise entre 120° et 150° par rapport au plan vertical passant par l'axe de la traverse (12).

6. Dispositif de protection selon l'une des revendications précédentes, **caractérisé en ce que** le train arrière (2) porte deux butées symétriques (22a, 22b) s'étendant vers l'avant en direction des becs (14) de l'armature (1).

7. Dispositif de protection selon l'une des revendications précédentes, **caractérisé en ce que** les éléments de support du bac portent chacun deux platines (13) sensiblement horizontales de fixation sur la caisse du véhicule.

8. Dispositif de protection selon la revendication précédente, **caractérisé en ce que** lesdites platines (13) délimitent entre elles un créneau (15) destiné à recevoir, en cas d'impact, une chape (23) portée par un bras longitudinal (21) déformable de fixation du train arrière (2).

9. Dispositif de protection selon les revendications 6 et 8, **caractérisé en ce que** lesdites butées (22a, 22b) sont montées entre les bras longitudinaux (21) déformables de fixation du train arrière (2).

10. Véhicule électrique équipé d'une batterie conditionnée dans un bac pourvu d'un dispositif de protection contre les impacts selon l'une des revendications précédentes.

## Patentansprüche

1. Vorrichtung zum Schutz der Batterie eines Elektrofahrzeugs vor Stößen auf die Hinterachse (2), wobei die Batterie in einem Behälter verpackt ist, der mit einem Rahmen (1) versehen ist, der auf beiden Seiten der Wanne je einen Holm (11a, 11b) aufweist sein Ende über eine abgewinkelte Verbindungszone mit dem seitlichen Ende gegenüber einer hinteren Querstrebe (12) verbunden ist und dessen Außenseite mit mindestens einem Stützelement der Wanne versehen ist, **dadurch gekennzeichnet, dass** jede Verbindungszone einen vorstehenden Schnabel (14) aufweist nach hinten, gebildet durch die Verbindung von mindestens zwei Vorsprüngen (110, 120), die von den jeweiligen Enden des Holms (11a, 11b) und des Querstücks (12) getragen werden.

2. Schutzvorrichtung nach Anspruch 1, **dadurch gekennzeichnet, dass** die Vorsprünge (110) der Seitenteile (11a, 11b) bis unter die Vorsprünge (120) des Querträgers (12) reichen.

3. Schutzvorrichtung nach einem der vorhergehenden Ansprüche, **dadurch gekennzeichnet, dass** die Ausgüsse (14) außerdem Vorsprünge (130) umfassen, die von den Stützelementen der Schale getragen werden.

4. Schutzvorrichtung nach dem vorhergehenden Anspruch, **dadurch gekennzeichnet, dass** die Vorsprünge (130) der Stützelemente der Wanne über die Vorsprünge (120) des Querträgers (12) hinausragen.

5. Schutzvorrichtung nach einem der vorhergehenden Ansprüche, **dadurch gekennzeichnet, dass** die Backen (14) eine divergierende Neigung zwischen 120° und 150° in Bezug auf die vertikale Ebene aufweisen, die durch die Achse des Querträgers (12) verläuft.

6. Schutzvorrichtung nach einem der vorhergehenden Ansprüche, **dadurch gekennzeichnet, dass** die Hinterachse (2) zwei symmetrische Anschläge (22a, 22b) trägt, die sich nach vorne in Richtung der Laschen (14) des Ankers (1) erstrecken.

7. Schutzvorrichtung nach einem der vorhergehenden Ansprüche, **dadurch gekennzeichnet, dass** die Wannentragelemente jeweils zwei im Wesentlichen horizontale Montageplatten (13) an der Karosserie des Fahrzeugs tragen.

8. Schutzvorrichtung nach dem vorhergehenden Anspruch, **dadurch gekennzeichnet, dass** die Platten (13) zwischen sich einen Schlitz (15) begrenzen, der dazu bestimmt ist, im Falle eines Aufpralls ein Joch (23) aufzunehmen, das von einem verformbaren Längsarm (21) getragen wird Hinterachslagerung (2).

9. Schutzvorrichtung nach Anspruch 6 und 8, **dadurch gekennzeichnet, dass** die genannten Anschläge (22a, 22b) zwischen den verformbaren Längsarmen (21) zur Fixierung der Hinterachse (2) angebracht sind.

10. Elektrofahrzeug, ausgestattet mit einer Batterie, verpackt in einem Behälter, der mit einer Vorrichtung zum Schutz vor Stößen nach einem der vorhergehenden Ansprüche ausgestattet ist.

## Claims

1. Device for protecting the battery of an electric vehicle against impacts on the rear axle (2), said battery being packaged in a container provided with a frame (1) comprising, on either side of the tray, a spar (11a, 11b) whose end is connected, via an angled connection zone, to the lateral end opposite a rear crossmember (12) and whose outer side is provided with at least one support element of the tray, **characterized in that** each connecting zone comprises a beak (14) projecting towards the rear formed by the joining together of at least two protrusions (110, 120) carried by the respective ends of the spar (11a , 11b) and the crosspiece (12).

2. Protective device according to Claim 1, **characterized in that** the protuberances (110) of the side members (11a, 11b) extend below the protuberances (120) of the crosspiece (12).

3. Protective device according to one of the preceding claims, **characterized in that** the said spouts (14) further comprise protrusions (130) carried by the support elements of the tray.

4. Protective device according to the preceding claim, **characterized in that** the protuberances (130) of the support elements of the tray extend above the protrusions (120) of the crosspiece (12).

5. Protective device according to one of the preceding claims, **characterized in that** the said jaws (14) have a divergent inclination of between 120° and 150° with respect to the vertical plane passing through the axis of the crosspiece (12).

6. Protective device according to one of the preceding claims, **characterized in that** the rear axle (2) carries two symmetrical stops (22a, 22b) extending forwards in the direction of the lugs (14) of the armature (1).

7. Protective device according to one of the preceding claims, **characterized in that** the tray support elements each carry two substantially horizontal mounting plates (13) on the body of the vehicle.

8. Protective device according to the preceding claim, **characterized in that** the said plates (13) delimit between them a slot (15) intended to receive, in the event of impact, a yoke (23) carried by a longitudinal arm (21) deformable by rear axle mounting (2).

9. Protective device according to Claims 6 and 8, **characterized in that** the said stops (22a, 22b) are mounted between the deformable longitudinal arms (21) for fixing the rear axle (2).

10. Electric vehicle equipped with a battery packaged in a container provided with a device for protection against impacts according to one of the preceding claims.
